# EUROPEAN PATENT APPLICATION

(11) **EP 2 711 071 A2**
(43) Date of publication of application: **26.03.2014**
(21) Application number: 12790031.4
(22) Date of filing: 18.05.2012
(51) Int. Cl.: B01D 69/02, B01D 69/12, B01D 69/10, B01D 71/68

(54) **METHOD FOR PREPARING A REVERSE OSMOSIS MEMBRANE, AND REVERSE OSMOSIS MEMBRANE PREPARED THEREBY**

(30) Priority: 20.05.2011 KR 20110048041; 18.05.2012 KR 20120052842
(71) Applicant: LG Chem, Ltd., Seoul 150-875 (KR)
(72) Inventor: YOO, Joung-Eun, Daejeon-si 302-828 (KR); SHIN, Chong-Kyu, Daejeon-si 305-358 (KR); JEONG, Seung-Pyo, Gwangju-si Gyeonggi-do 464-712 (KR); LEE, Phill, Daejeon-si 305-750 (KR); LEE, Young-Ju, Daegu-si 702-050 (KR)
(74) Representative: Goddar, Heinz J.
(86) International application number: PCT/KR2012/003961
(87) International publication number: WO 2012/161483

(57) **Abstract**

There is disclosed a method for preparing a reverse osmosis membrane, the method including: forming a first coating layer by coating an aqueous amine solution on a surface of a microporous support to have a thickness of 20 µm to 30 µm; removing an excess of the aqueous amine solution from the microporous support; and forming a second coating layer by coating an aliphatic hydrocarbon-based organic solution including acyl halide on the first coating layer to have a thickness of 10 µm to 30 µm.

## Description

### [Technical Field]

The present invention relates to a method for preparing a reverse osmosis membrane and a reverse osmosis membrane prepared using the same, and more particularly, to a method for preparing a reverse osmosis membrane including an active layer having a reduced thickness and excellent uniformity and thus, having an excellent permeate flow rate and excellent salt rejection characteristics, and a reverse osmosis membrane prepared using the same.

### [Background Art]

An osmosis phenomenon refers to a phenomenon in which a solvent moves from a solution having a low solute concentration to another solution having a high solute concentration by passing through a semipermeable separation membrane isolating the two solvents. In this case, pressure acting on the solution having a high solute concentration through the movement of the solvent refers to osmotic pressure. However, when external pressure having a level greater than that of osmotic pressure is applied, the solvent moves towards the solution having a low solute concentration, and such a phenomenon is known as reverse osmosis. Various types of salt or organic material may be separated by a semipermeable membrane using a pressure gradient as driving force, according to the principle of reverse osmosis. A reverse osmosis membrane using a reverse osmosis phenomenon has been used to separate a molecular-level material and remove salts from salt water or sea water and supply water for households, constructions, and industries.

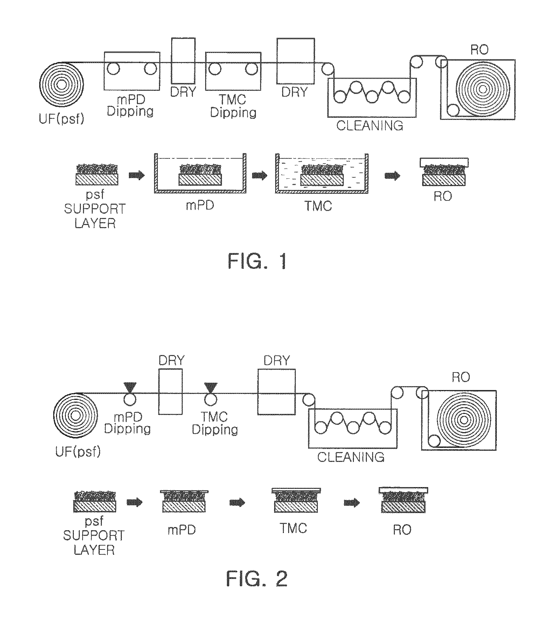

The reverse osmosis membrane may representatively include a polyamide-based reverse osmosis membrane, by way of example. The polyamide-based reverse osmosis membrane is prepared by a method of forming a polyamide active layer on a microporous layer support. More particularly, as illustrated in FIG. 1, the polyamide-based reverse osmosis membrane is prepared in such a manner that a microporous support is formed by forming a polysulfone layer on a non-woven fabric, dipping the microporous support in an aqueous m-phenylene diamine (mPD) solution to form an mPD layer, dipping the mPD layer in an organic trimesoyl chloride (TMC) solvent to allow the mPD layer to be brought into contact with the TMC so as to be interfacially polymerized to form a polyamide layer.

However, since the reverse osmosis membrane prepared according to the related art method may include a significantly thick active layer, it may be disadvantageous in that permeate flow rate efficiency may be deteriorated, uniformity in thickness of the active layer may be degraded, and a dipping time required for forming the active layer may be relatively long, leading to reduced productivity.

### [Detailed Description of Invention]

### [Technical Problem]

An aspect of the present invention provides a method for preparing a reverse osmosis membrane including an active layer having a reduced thickness and excellent uniformity, and having an excellent permeate flow rate and an excellent salt rejection rate, and a reverse osmosis membrane prepared using the same.

### [Technical Solution]

According to an aspect of the present invention, there is provided a method for preparing a reverse osmosis membrane, the method including: forming a first coating layer by coating an aqueous amine solution on a surface of a microporous support to have a thickness of 20 µm to 30 µm; removing an excess of the aqueous amine solution from the microporous support; and forming a second coating layer by coating an aliphatic hydrocarbon-based organic solution including acyl halide on the first coating layer to have a thickness of 10 µm to 30 µm.

According to another aspect of the present invention, there is provided a reverse osmosis membrane including: a microporous support; and an active layer formed through an interfacial polymerization reaction between a first coating layer formed using an aqueous amine solution on the microporous support and a second coating layer formed using an aliphatic hydrocarbon-based organic solution including acyl halide, wherein the active layer has a thickness of 90 nm to 150 nm.

According to another aspect of the present invention, there is provided a reverse osmosis membrane prepared by the method for preparing a reverse osmosis membrane and including an active layer having a thickness of 90 nm to 150 nm.

### [Effects of Invention]

As set forth above, the reverse osmosis membrane prepared by the method according to embodiments of the invention can include an active layer having a reduced thickness and excellent uniformity and further, can have an excellent permeate flow rate and an excellent salt rejection rate.

Further, according to the method for preparing a reverse osmosis membrane, since a dipping process for forming an active layer is not required, time required for production can be shortened and productivity can be improved.

### [Description of Drawings]

FIG. 1 is a view illustrating a process for preparing a reverse osmosis membrane according to the related art; and
FIG. 2 is a view illustrating a process for preparing a reverse osmosis membrane according to an embodiment of the present invention.

### [Best Mode for Invention]

Hereinafter, embodiments of the present invention will be described in detail with reference to the accompanying drawings.

FIG. 2 illustrates a process for preparing a reverse osmosis membrane according to an embodiment of the present invention. As illustrated in FIG. 2, the method for preparing a reverse osmosis membrane according to an embodiment of the present invention may include forming a first coating layer by coating an aqueous amine solution on a surface of a microporous support; removing an excess of the aqueous amine solution from the microporous support; and forming a second coating layer by coating an aliphatic hydrocarbon-based organic solution including acyl halide on the first coating layer.

First, the first coating layer is formed by coating the aqueous amine solution on a surface of the microporous support.

In this case, the microporous support may be formed by casting a polymer material on a non-woven fabric. As the polymer material, polysulfone, polyethersulfone, polycarbonate, polyethylene oxide, polyimide, polyetherimide, polyetheretherketone, polypropylene, polymethylpentene, polymethyl chloride, and polyvinylidene fluoride, or the like, may be used, for example, but the present invention is not necessarily limited thereto. Among them, the polymer material may be preferably, polysulfone.

In addition, the aqueous amine solution is not limited, but may include m-phenylenediamine, p-phenylenediamine, 1,3,6-benzenetriamine, 4-chloro-1,3-phenylendiamine, 6-chloro-1,3-phenylendiamine, 3-chloro-1,4-phenylendiamine and mixtures thereof.

Meanwhile, the coating may be carried out in a direct coating method. In this case, direct coating refers to applying an aqueous amine solution directly to a surface of the microporous support using a method such as bar coating, roll coating, air knife coating, slot die coating or the like. In the specification, the term "direct coating" is used as having a meaning differentiated from that of a dipping method, a method for forming an amide active layer according to the related art.

Meanwhile, an adhered amount of the first coating layer before drying may be about 20 µm to 30 µm, preferably, about 20 µm to 25 µm. When an adhered amount of the aqueous amine solution before drying is below this range, the adhered amount is small in quantity, such that a reaction between the first coating layer and the second coating layer may not be sufficiently generated. When the adhered amount of the aqueous amine solution before drying is above the range, the adhered amount may be excessively provided, such that the active layer may have a high, non-uniform thickness, leading to deteriorated functionality of the membrane.

After forming the first coating layer as described above, an excess of the aqueous amine solution is removed from the microporous support. In this case, the removal of the aqueous amine solution may be performed using a bar, a roller, an air knife, a sponge, or the like. In addition, after the removing of the aqueous amine solution, a drying process may be further undertaken if necessary.

Then, the second coating layer is formed by coating the aliphatic hydrocarbon-based organic solution including acyl halide on the microporous support coated with the aqueous amine solution.

In this case, the aliphatic hydrocarbon-based organic solution including acyl halide may include trimesoyl chloride, isophthaloyl chloride, and terephthaloyl chloride, or mixtures thereof. As the organic solvent, an aliphatic hydrocarbon solvent, for example, a Freon-based material and hydrophobic liquid having 8-12 carbons which is immiscible with water, such as hexane, cyclohexane, heptane, and alkane, alkane having 8-12 carbons and mixtures thereof such as Isol-C (by Exxon Corp.), Isol-G (by Exxon Corp.) or the like may be used, for example.

The coating of the second coating layer may also be carried out in a direct coating method, for example, bar coating, roll coating, air knife coating, slot die coating or the like.

Most preferably, both the first coating layer and the second coating layer may be formed by a direct coating method, for example, bar coating, roll coating, air knife coating, slot die coating or the like. In this case, the active layer may be thinly and uniformly formed to improve the flow rate of the membrane, as compared to the case in which either one of the first coating layer and the second coating layer is formed by a coating method or neither of the two layers is formed by a coating method.

Meanwhile, an adhered amount of the second coating layer before drying may be about 10 µm to 30 µm, preferably, about 20 µm to 28 µm. When an adhered amount of the second coating layer before drying is below this range, the reaction between the first coating layer, that is, the aqueous amine solution, and the second coating layer may not be sufficiently generated. When the adhered amount of the second coating layer before drying is above the range, the adhered amount may be excessively provided, such that the active layer may have a high, non-uniform thickness, leading to deteriorated functionality of the membrane.

As described above, when the organic solution including acyl halide is coated on the microporous support coated with the aqueous amine solution, amine contained in the aqueous amine solution and acyl halide included in the organic solution, come into contact with each other and are interfacially polymerized to form a polyamide active layer.

In addition, the polyamide active layer after drying may have a thickness of about 90 nm to 150 nm, specifically, about 90 nm to 135 nm. When the polyamide active layer has a thickness below 90 nm, since the reaction between the first coating layer and the second coating layer may not be sufficiently generated, improvements in permeate flow rate and salt rejection rate may be lowered as compared to the case of a membrane prepared by a dipping method according to the related art. When the polyamide active layer has a thickness above 150 nm, since the active layer is thick and a membrane is non-uniformly formed, functionality of the membrane may also be degraded.

When the polyamide active layer is formed on the microporous support through the process as described above, processes for drying and cleaning the polyamide active layer formed on the microporous support are undertaken. In this case, the drying may be carried out at 60°C to 70°C for about 5 to 10 minutes. In addition, the cleaning is not particularly limited, but may be undertaken with an aqueous alkaline solution, for example. The aqueous alkaline solution available for cleaning is not particularly limited, but may be an aqueous sodium carbonate solution, for example. Specifically, the cleaning may be carried out at room temperature for two hours or more.

A reverse osmosis membrane according to an embodiment of the present invention, formed by the foregoing method may include a microporous support; and an active layer formed through an interfacial polymerization reaction between a first coating layer formed using an aqueous amine solution on the microporous support and a second coating layer formed using an aliphatic hydrocarbon-based organic solution including acyl halide.

In this case, the active layer may have a thickness of about 90 nm to 150 nm. When the active layer has a thickness below 90 nm, since the reaction between the first coating layer and the second coating layer may not be sufficiently generated, improvements in permeate flow rate and salt rejection rate may be lowered as compared to the case of a membrane prepared by a dipping method according to the related art. When the active layer has a thickness over 150 nm, since the active layer is thick and the membrane is non-uniformly formed, functionality of the membrane may also be degraded.

Moreover, the active layer according to the embodiment of the present invention has a significantly reduced thickness, in consideration of the fact that an active layer formed using a dipping method has a thickness of 0.2 to 1 µm.

Furthermore, the active layer of the reverse osmosis membrane according to the embodiment of the present invention may have a significantly high degree of uniformity. For example, the active layer according to the embodiment of the present invention may have an average surface roughness of about 5 nm to 20 nm, for example, in the range of about 10 nm to 20 nm or about 5 nm to 10 nm. In this case, the reverse osmosis membrane is dried to be used as a sample, a fine probe included in an atomic force microscope (AFM) is positioned in close proximity to a surface of the reverse osmosis membrane to image the reverse osmosis membrane on the atomic level, and then force acting between quantum atoms may be used to measure the average surface roughness.

As described above, since the reverse osmosis membrane according to the embodiment of the present invention may include the active layer having excellent layer uniformity, pores may be uniformly formed in a layer surface and consequently, the permeate flow rate and the salt rejection rate superior than those of a reverse osmosis membrane according to the related art may be obtained.

In addition, the reverse osmosis membrane according to the embodiment of the present invention may have high permeate flow rate efficiency due to a reduced thickness thereof, and further, due to a high salt rejection rate thereof, may be advantageously used in the desalination of saltwater and seawater, preparing ultrapure water for semiconductor industrial use, the disposal of various types of industrial waste water, and the like.

### [Mode for Invention]

Hereinafter, embodiments of the present invention will be described in detail with reference to concrete examples.

### Example 1

A first coating layer was formed by coating 2% by weight of an aqueous m-phenylene diamine solution including 1% by weight of triethylamine on a porous polysulfone support cast on a non-woven fabric and having a thickness of 140 µm, to have a thickness of 13.72 µm using a sixth bar. After an excess of the aqueous amine solution present on the support was removed, 0.1% by weight of an organic trimesoyl chloride solution using an Isopar solvent was coated on the first coating layer to have a thickness of 27.43 µm using a twelfth bar to form a second coating layer, and was then dried in an oven at 60°C for 10 minutes and washed in 0.2% by weight of an aqueous sodium carbonate solution at room temperature for two hours or more, such that a reverse osmosis membrane was prepared. After the preparing of the reverse osmosis membrane, the reverse osmosis membrane had an active layer having a total thickness of 91 nm and an average surface roughness of 10 nm.

### Example 2

A reverse osmosis membrane was prepared using the same method as that of Example 1, with the exception that the aqueous m-phenylene diamine solution was coated to have a thickness of 20.57 µm using a ninth bar and the organic trimesoyl chloride solution was coated to have a thickness of 13.72 µm using the sixth bar. After the preparing of the reverse osmosis membrane, the reverse osmosis membrane had an active layer having a total thickness of 94 nm and an average surface roughness of 9 nm.

### Example 3

A reverse osmosis membrane was prepared using the same method as that of Example 1, with the exception that the aqueous m-phenylene diamine solution and the organic trimesoyl chloride solution were coated to have a thickness of 20.57 µm using the ninth bar. After the preparing of the reverse osmosis membrane, the reverse osmosis membrane had an active layer having a total thickness of 97 nm and an average surface roughness of 9 nm.

### Example 4

A reverse osmosis membrane was prepared using the same method as that of Example 1, with the exception that the aqueous m-phenylene diamine solution was coated to have a thickness of 20.57 µm using the ninth bar and the organic trimesoyl chloride solution was coated to have a thickness of 27.43 µm using the twelfth bar. After the preparing of the reverse osmosis membrane, the reverse osmosis membrane had an active layer having a total thickness of 98 nm and an average surface roughness of 9 nm.

### Example 5

A reverse osmosis membrane was prepared using the same method as that of Example 1, with the exception that the aqueous m-phenylene diamine solution was coated to have a thickness of 27.43 µm using the twelfth bar and the organic trimesoyl chloride solution was coated to have a thickness of 13.72 µm using the sixth bar. After the preparing of the reverse osmosis membrane, the reverse osmosis membrane had an active layer having a total thickness of 100 nm and an average surface roughness of 7 nm.

### Example 6

A reverse osmosis membrane was prepared using the same method as that of Example 1, with the exception that the aqueous m-phenylene diamine solution was coated to have a thickness of 27.43 µm using the twelfth bar and the organic trimesoyl chloride solution was coated to have a thickness of 20.57 µm using the ninth bar. After the preparing of the reverse osmosis membrane, the reverse osmosis membrane had an active layer having a total thickness of 124 nm and an average surface roughness of 6 nm.

### Example 7

A reverse osmosis membrane was prepared using the same method as that of Example 1, with the exception that the aqueous m-phenylene diamine solution and the organic trimesoyl chloride solution were coated using the twelfth bar. After the preparing of the reverse osmosis membrane, the reverse osmosis membrane had an active layer having a total thickness of 135 nm and an average surface roughness of 6 nm.

### Comparative Example 1

After dipping a porous polysulfone support cast on a non-woven fabric and having a thickness of 140 µm into 2% by weight of an aqueous m-phenylene diamine solution including 1% by weight of triethylamine for 2 minutes, an excess of the aqueous amine solution present on the support was removed. Next, after dipping the support into 0.1% by weight of an organic trimesoyl chloride solution using an Isopar solvent for 1 minute, the support was dried in an oven at 60°C for 10 minutes and washed in 0.2% by weight of an aqueous sodium carbonate solution at room temperature for two hours or more, such that a reverse osmosis membrane was prepared. After the preparing of the reverse osmosis membrane, the reverse osmosis membrane had an active layer having a total thickness of 835 nm and an average surface roughness of 20 nm.

### Comparative Example 2

After 2% by weight of an aqueous m-phenylene diamine solution including 1% by weight of triethylamine was coated on a porous polysulfone support cast on a non-woven fabric and having a thickness of 140 µm, to have a thickness of 20. 57 µm using the ninth bar, an excess of the aqueous amine solution present on the support was removed. Next, after dipping the support into 0.1% by weight of an organic trimesoyl chloride solution using an Isopar solvent for 1 minute, the support was dried in an oven at 60°C for 10 minutes and washed in 0.2% by weight of an aqueous sodium carbonate solution at room temperature for two hours or more, such that a reverse osmosis membrane was prepared. After the preparing of the reverse osmosis membrane, the reverse osmosis membrane had an active layer having a total thickness of 469 nm and an average surface roughness of 18 nm.

### Comparative Example 3

After dipping a porous polysulfone support cast on a non-woven fabric and having a thickness of 140 µm into 2% by weight of an aqueous m-phenylene diamine solution including 1% by weight of triethylamine for 2 minutes, an excess of the aqueous amine solution present on the support was removed. Next, after coating 0.1% by weight of an organic trimesoyl chloride solution using an Isopar solvent on the support to have a thickness of 20.57 µm using the ninth bar, the support was dried in an oven at 60°C for 10 minutes and washed in 0.2% by weight of an aqueous sodium carbonate solution at room temperature for two hours or more, such that a reverse osmosis membrane was prepared. After the preparing of the reverse osmosis membrane, the reverse osmosis membrane had an active layer having a total thickness of 597 nm and an average surface roughness of 17 nm.

### Comparative Example 4

A reverse osmosis membrane was prepared using the same method as that of Example 1, with the exception that the aqueous m-phenylene diamine solution was coated to have a thickness of 6.86 µm using a third bar and the organic trimesoyl chloride solution was coated to have a thickness of 6.86 µm using the third bar. After the preparing of the reverse osmosis membrane, the reverse osmosis membrane had an active layer having a total thickness of 65 nm and an average surface roughness of 11 nm.

### Comparative Example 5

A reverse osmosis membrane was prepared using the same method as that of Example 1, with the exception that the aqueous m-phenylene diamine solution was coated to have a thickness of 13.72 µm using the sixth bar and the organic trimesoyl chloride solution was coated to have a thickness of 6.86 µm using the third bar. After the preparing of the reverse osmosis membrane, the reverse osmosis membrane had an active layer having a total thickness of 69 nm and an average surface roughness of 11 nm.

### Comparative Example 6

A reverse osmosis membrane was prepared using the same method as that of Example 1, with the exception that the aqueous m-phenylene diamine solution was coated to have a thickness of 20.57 µm using the ninth bar and the organic trimesoyl chloride solution was coated to have a thickness of 6.86 µm using the third bar. After the preparing of the reverse osmosis membrane, the reverse osmosis membrane had an active layer having a total thickness of 70 nm and an average surface roughness of 12 nm.

### Comparative Example 7

A reverse osmosis membrane was prepared using the same method as that of Example 1, with the exception that the aqueous m-phenylene diamine solution was coated to have a thickness of 27.43 µm using the twelfth bar and the organic trimesoyl chloride solution was coated to have a thickness of 6.86 µm using the third bar. After the preparing of the reverse osmosis membrane, the reverse osmosis membrane had an active layer having a total thickness of 71 nm and an average surface roughness of 12 nm.

### Comparative Example 8

A reverse osmosis membrane was prepared using the same method as that of Example 1, with the exception that the aqueous m-phenylene diamine solution was coated to have a thickness of 6.86 µm using the third bar and the organic trimesoyl chloride solution was coated to have a thickness of 13.72 µm using the sixth bar. After the preparing of the reverse osmosis membrane, the reverse osmosis membrane had an active layer having a total thickness of 74 nm and an average surface roughness of 12 nm.

### Comparative Example 9

A reverse osmosis membrane was prepared using the same method as that of Example 1, with the exception that the aqueous m-phenylene diamine solution was coated to have a thickness of 6.86 µm using the third bar and the organic trimesoyl chloride solution was coated to have a thickness of 20.57 µm using the ninth bar. After the preparing of the reverse osmosis membrane, the reverse osmosis membrane had an active layer having a total thickness of 78 nm and an average surface roughness of 13 nm.

### Comparative Example 10

A reverse osmosis membrane was prepared using the same method as that of Example 1, with the exception that the aqueous m-phenylene diamine solution was coated to have a thickness of 6.86 µm using the third bar and the organic trimesoyl chloride solution was coated to have a thickness of 27.43 µm using the twelfth bar. After the preparing of the reverse osmosis membrane, the reverse osmosis membrane had an active layer having a total thickness of 76 nm and an average surface roughness of 14 nm.

### Comparative Example 11

A reverse osmosis membrane was prepared using the same method as that of Example 1, with the exception that the aqueous m-phenylene diamine solution was coated to have a thickness of 13.72 µm using the sixth bar and the organic trimesoyl chloride solution was coated to have a thickness of 13.72 µm using the sixth bar. After the preparing of the reverse osmosis membrane, the reverse osmosis membrane had an active layer having a total thickness of 85 nm and an average surface roughness of 14 nm.

### Comparative Example 12

A reverse osmosis membrane was prepared using the same method as that of Example 1, with the exception that the aqueous m-phenylene diamine solution was coated to have a thickness of 13.72 µm using the sixth bar and the organic trimesoyl chloride solution was coated to have a thickness of 20.57 µm using the ninth bar. After the preparing of the reverse osmosis membrane, the reverse osmosis membrane had an active layer having a total thickness of 82 nm and an average surface roughness of 14 nm.

### Experimented Examples

Initial salt removal rates and Initial permeate flow rates were measured with respect to the reverse osmosis membranes prepared according to the Examples 1 to 7 and the Comparative Examples 1 to 12. The initial salt removal rates and the initial permeate flow rates were measured by disposing the respective reverse osmosis membranes prepared according to the Examples 1 to 7 and the Comparative Examples 1 to 12 in a reverse osmosis membrane cell apparatus including a flat-type permeation cell, a high pressure pump, a reservoir, and a cooling device, and then allowing an aqueous sodium chloride solution of 32,000 ppm to permeate the respective reverse osmosis membranes at a flow rate of 1400 mL/min under conditions of 25°C. The flat-type permeation cell was a cross-flow type cell and an effective permeation area thereof was 140 cm². The respective reverse osmosis membranes were disposed on the permeation cell, and then, preliminary operating was sufficiently performed for 1 hour using tertiary distilled water in order to stabilize evaluated equipment. Next, after the aqueous sodium chloride solution of 32,000 ppm was introduced in the apparatus, and an operation was undertaken for about 1 hour until pressure and permeate flow rate reached a normal state. Then, an amount of water permeated for 10 minutes was measured to measure the permeate flow rate and concentrations of salt before and after the permeation were analyzed using a conductivity meter to calculate the salt rejection rate. The measured results were indicated in the following [Table 1].

**[Table 1]**

| | Permeate Flow Rate (gallon/ft²· day) | Salt Rejection Rate (%) | Thickness of Active layer (nm) | Surface Roughness (nm) |
|---|---|---|---|---|
| Example 1 | 19.35 | 97.02 | 91 | 10 |
| Example 2 | 20.55 | 97.86 | 94 | 9 |
| Example 3 | 21.55 | 98.35 | 97 | 9 |
| Example 4 | 21.49 | 98.28 | 98 | 9 |
| Example 5 | 20.12 | 97.56 | 100 | 7 |
| Example 6 | 20.38 | 98.29 | 124 | 6 |
| Example 7 | 20.21 | 98.12 | 135 | 6 |
| Comparative Example 1 | 19.12 | 96.89 | 835 | 20 |
| Comparative Example 2 | 18.89 | 97.12 | 469 | 18 |
| Comparative Example 3 | 19.85 | 96.98 | 597 | 17 |
| Comparative Example 4 | 18.13 | 94.56 | 65 | 11 |
| Comparative Example 5 | 18.71 | 95.23 | 69 | 11 |
| Comparative Example 6 | 19.28 | 95.48 | 70 | 12 |
| Comparative Example 7 | 19.91 | 95.99 | 71 | 12 |
| Comparative Example 8 | 17.89 | 95.24 | 74 | 12 |
| Comparative Example 9 | 18.11 | 95.49 | 78 | 13 |
| Comparative Example 10 | 18.36 | 95.82 | 76 | 14 |
| Comparative Example 11 | 18.21 | 96.20 | 85 | 14 |
| Comparative Example 12 | 19.08 | 96.68 | 82 | 14 |

## Claims

1. A method for preparing a reverse osmosis membrane, the method comprising:
forming a first coating layer by coating an aqueous amine solution on a surface of a microporous support to have a thickness of 20 µm to 30 µm;
removing an excess of the aqueous amine solution from the microporous support; and
forming a second coating layer by coating an aliphatic hydrocarbon-based organic solution including acyl halide on the first coating layer to have a thickness of 10 µm to 30 µm.

2. The method of claim 1, wherein the forming of the first coating layer and the second coating layer is performed through bar coating, roll coating, air knife coating, or slot die coating.

3. The method of claim 1, wherein the microporous support is selected from a group consisting of polysulfone, polyethersulfone, polycarbonate, polyethylene oxide, polyimide, polyetherimide, polyetheretherketone, polypropylene, polymethylpentene, polymethyl chloride, and polyvinylidene fluoride.

4. The method of claim 1, wherein the aqueous amine solution is selected from a group consisting of m-phenylenediamine, p-phenylenediamine, 1,3,6-benzenetriamine, 4-chloro-1,3-phenylendiamine, 6-chloro-1,3-phenylendiamine, 3-chloro-1,4-phenylendiamine and mixtures thereof.

5. The method of claim 1, wherein the aliphatic hydrocarbon-based organic solution including acyl halide includes at least one selected from a group consisting of trimesoyl chloride, isophthaloyl chloride, and terephthaloyl chloride.

6. A reverse osmosis membrane comprising:
a microporous support; and
an active layer formed through an interfacial polymerization reaction between a first coating layer formed using an aqueous amine solution on the microporous support and a second coating layer formed using an aliphatic hydrocarbon-based organic solution including acyl halide,
wherein the active layer has a thickness of 90 nm to 150 nm.

7. The reverse osmosis membrane of claim 6, wherein the active layer has an average surface roughness of 5 nm to 10 nm.

8. The reverse osmosis membrane of claim 6, wherein the microporous support is selected from a group consisting of polysulfone, polyethersulfone, polycarbonate, polyethylene oxide, polyimide, polyetherimide, polyetheretherketone, polypropylene, polymethylpentene, polymethyl chloride, and polyvinylidene fluoride.

9. The reverse osmosis membrane of claim 6, wherein the aqueous amine solution is selected from a group consisting of m-phenylenediamine, p-phenylenediamine, 1,3,6-benzenetriamine, 4-chloro-1,3-phenylendiamine, 6-chloro-1,3-phenylendiamine, 3-chloro-1,4-phenylendiamine and mixtures thereof.

10. The reverse osmosis membrane of claim 6, wherein the aliphatic hydrocarbon-based organic solution including acyl halide includes at least one selected from a group consisting of trimesoyl chloride, isophthaloyl chloride, and terephthaloyl chloride.

11. A reverse osmosis membrane prepared by the method of any one of claims 1 to 5 and including an active layer having a thickness of 90 nm to 150 nm.

12. The reverse osmosis membrane of claim 11, wherein the active layer has a surface roughness of 5 nm to 10 nm.
